(19) Europäisches Patentamt
European Patent Office
Office européen des brevets

(11) **EP 3 606 640 B1**

(12) **EUROPEAN PATENT SPECIFICATION**

(45) Date of publication and mention
of the grant of the patent:
**13.08.2025 Bulletin 2025/33**

(21) Application number: **18717708.4**

(22) Date of filing: **05.04.2018**

(51) International Patent Classification (IPC):
*B01D 46/00* (2022.01)    *B01D 46/52* (2006.01)
*B01D 29/21* (2006.01)    *B01D 29/52* (2006.01)
*B01D 46/24* (2006.01)

(52) Cooperative Patent Classification (CPC):
**B01D 29/21; B01D 29/52; B01D 46/0005;**
**B01D 46/2407; B01D 46/52; B01D 46/58;**
B01D 2201/0453; B01D 2201/296; B01D 2201/347;
B01D 2201/4076

(86) International application number:
**PCT/IB2018/052375**

(87) International publication number:
**WO 2018/185707 (11.10.2018 Gazette 2018/41)**

(54) **FILTER ELEMENT AND FILTER ARRANGEMENT HAVING FLUID FILTERS AND FILTER ELEMENT**

FILTERELEMENT UND FILTERANORDNUNG MIT FLUIDFILTERN UND FILTERELEMENT

ÉLÉMENT FILTRANT ET AGENCEMENT DE FILTRE AYANT DES FILTRES DE FLUIDE ET UN ÉLÉMENT FILTRANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.04.2017 DE 202017102087 U**

(43) Date of publication of application:
**12.02.2020 Bulletin 2020/07**

(73) Proprietor: **Boll & Kirch Filterbau Gesellschaft mit beschränkter Haftung**
**50170 Kerpen (DE)**

(72) Inventors:
• **RATHSMANN, Jens**
**52385 Nideggen (DE)**
• **LAKENBRINK, Oliver**
**50939 Köln (DE)**

(74) Representative: **Patentanwälte Buschhoff Hennicke Althaus**
**Kaiser-Wilhelm-Ring 24**
**50672 Köln (DE)**

(56) References cited:
**EP-A1- 3 124 092**    **WO-A1-90/00434**
**DE-U1- 20 320 121**    **DE-U1- 202005 010 059**

**Description**

The invention relates to a filter element for fluid filters, having an element body comprising a longitudinal axis, said element body comprising or forming a filter means through which fluid to be filtered is able to flow, and having at least one connecting socket which is open on the front face at one end of the element body for the releasable fastening of the filter element to a through-opening in a retaining device in the fluid filter, wherein the connecting socket comprises a lateral surface which is partially provided with a flattened portion and a bearing surface for a sealing ring for cooperating with an internal wall of the through-opening. The invention further relates to a filter arrangement having a fluid filter which comprises a housing and at least one retaining device arranged in the housing with a through-opening comprising an internal wall for fastening a filter element, as well as at least one filter element which has an element body comprising a longitudinal axis and containing a filter means through which fluid is able to flow, and at least one connecting socket which is open on the front face at one end of the element body and which has a lateral surface partially provided with a flattened portion, wherein a bearing surface for a sealing ring is provided for leak-free fastening of the filter element in the through-opening of the retaining device.

Filter candles and filter arrangements for filtering liquids or gases are used in very different industrial fields and for different purposes. Many machines or motors are provided with lubricating oil filters with replaceable filter elements. Fuel filters with replaceable filter elements may also be used in internal combustion engines. Other fields of use are constituted, for example, by water filtration or the filtration of gases. The fluid filters in turn may be provided with an individual filter element or a plurality of filter elements in order to increase the filtering surface. A cleaning device such as a backwashing device may be arranged in the filter element in order to clean the filter during operation and/or to backwash the filter counter to the filtering direction.

In most known fluid filters, the replaceable filter elements are locked in position at a through-opening in a retaining device on the filter side, such as for example a perforated plate, via a connection which is able to be plugged together, wherein a cylindrical connecting socket is provided on the filter element side, said connecting socket being inserted into the associated through-hole in the retaining device on the filter side. The perforated plate at the same time generally undertakes the separation between clean space for the unfiltered filtrate and the inflow side for unfiltered fluid. A release of the filter elements from the retaining device is frequently prevented by means of separate securing elements.

DE 20 2005 010 059 U discloses a filter arrangement having a plurality of filter candles as filter elements, wherein each filter candle comprises a cylindrical top piece as a connecting socket, wherein the top piece is provided with a receiving groove for an O-ring as a seal and is also provided with a peripheral annular groove, an oval through-opening of a securing plate which is displaceable transversely to the perforated plate being able to be inserted therein. The perforated plate and the securing plate are provided with a plurality of through-openings in order to secure a plurality of filter candles simultaneously. The securing plate acts transversely to the longitudinal axis of the filter elements.

DE 203 20 121 U discloses a filter arrangement in which the individual filter elements are provided on the connecting socket with a plurality of flattened portions which are offset over the periphery and with latching recesses between the flattened portions. The filter elements are fastened to a perforated plate, wherein a specific receiving socket is inserted into each through-opening, the connecting socket on the filter element being able to be inserted into said receiving socket. The receiving socket in turn is provided with a number of recesses corresponding to the number of flattened portions, a clamping element engaging therein. For locking the receiving socket and the connecting socket, the filter element together with the connecting socket is inserted into the receiving socket and then rotated in order to secure the filter element axially in the latching position. The clamping element in this case acts counter to a rotation of the filter element relative to the retaining device. The seal is implemented by an O-ring which acts between the front face of the receiving socket and the front face of the connecting socket. The connecting socket and the receiving socket consist of metal, in particular sheet metal parts, the production thereof being relatively costly, in particular due to the recesses required. A seal is only ensured when the retaining forces acting in the axial direction of the filter elements are sufficiently high. The solution, however, provides the advantage of anti-twist protection between the filter element, on the one hand, and the retaining device, on the other hand.

EP 3 124 092 A1 discloses a generic filter element according to the preamble of claim 1 for a filter for hydraulic fluids. A container is forming a housing inside which a single filter cartridge is arranged. The filter cartridge and the housing comprise cooperating parts for their connection, namely a collar rooting from the bottom of the housing and having an outer coupling lateral surface as well as a respective collar on the filter cartridge having an inner coupling lateral surface for engaging outside the outer coupling surface on the bottom of the filter housing; the respective co-operating surfaces, do have a polygonal cross section with flat portions and curved transitions. The filter cartridge is placed on the outer periphery of the collar fixed to the bottom of the housing. A special formed seal having a cooperating polygonal cross section is needed to ensure a leakage free seal between the cartridge and the housing.

It is the object of the invention to provide a filter arrangement and filter elements therefor which are simpler to mount and to produce, which ensure a secure seal and which at the same time provide anti-twist protection between the filter element and the retaining device.

This object is achieved for a filter element with the invention as defined in claim 1. Preferred embodiments of the filter element are claimed in claims 2 to 10, and advantageous embodiments of a filter arrangement comprising a fluid filter with a fastened filter element according to the invention are claimed in claims 11 to 15.

According to the invention, a receiving groove is provided for the sealing ring on the connecting socket, namely on the outer periphery of the connecting socket, and the groove base of said receiving groove is having the polygonal cross section with flat portions and curved transitions alternating with one another, and the polygonal groove base serves as an inner radial bearing surface for the sealing ring. The polygonal shape ensures a secure anti-twist protection, both relative to vibrations and also relative to significant variations in load due to flow or pressure, wherein the sealing ring acting in the polygonal through-opening ensures the best possible seal.

Compared to solutions known from the prior art with a spring element, the production is simplified at the same time. The polygonal cross-sectional shape on the groove base, on the connecting socket and on the internal wall of the retaining device is located in the sealing region and by alternating the flat portions and curved transitions in the sealing region it is possible to prevent filter elements with circular connecting sockets from being able to be fitted and/or having to have a small connecting socket, such that it is already obvious to the fitter by visual inspection that a seal would not be ensured.

In the filter element according to the invention, the lateral surface also has a polygonal cross section with flat portions and curved transitions alternating with one another.

In a filter arrangement using a filter element according to the invention, the connecting socket comprises the receiving groove for the sealing ring, the groove base thereof forming the radial bearing surface for the sealing ring, wherein the groove base and the internal wall in each case have a polygonal cross section with flat portions and curved transitions alternating with one another. It is particularly advantageous if the groove base and the lateral surface and the internal wall in each case have an even number of flat portions of similar type to one another.

In principle, different types of polygonal cross sections could be provided on the groove base of the receiving groove, on the connecting socket of each filter element and/or on the through-opening in the retaining devices. In order to obtain advantageous conditions for the mounting and the pre-compression of the sealing ring, however, the particularly preferred embodiment for the polygonal cross sections of the groove base and the internal wall, and the lateral surface on the connecting socket, in each case provide a hexagonal cross section with 6 flat portions and 6 curved transitions. It is even more advantageous if in this embodiment a symmetrical hexagonal cross section is provided in which the flat portions on the groove base, on the lateral surface and on the internal wall of the through-opening oppose one another in pairs and in parallel at a specific spacing (A) and the curved transitions on the groove base, on the internal wall and on the lateral surface in each case have a uniform radius of curvature ($R_i$) relative to one another, wherein for the ratio of the spacing relative to the radius of curvature, the following applies:

$$2 \, < \, A_i/R_i \, \leq \, 5,$$

and preferably the following applies:

$$2.3 \, \leq \, A_i/R_i \, \leq \, 3.6 \, .$$

It goes without saying that due to the required adaptation of the clearance or transition between interlockable parts, namely the connecting socket and the through-bore, the radius of curvature $R_{KM}$ of the lateral surface is different from the radius of curvature of the internal wall $R_{KW}$ and the radius of curvature of the groove base $R_N$, wherein preferably the radii of curvature in each case have a uniform difference relative to one another. Accordingly, in the particularly preferred embodiment the radius of curvature $R_i$ of a curved transition on the lateral surface and the radius of curvature $R_i$ of a curved transition on the groove base are in each case concentric relative to one another and have a common central point.

The flat portions may be partially planar; however, the flat portions may also have a crowned surface, partially and/or along their entire extension, the curvature thereof being smaller than the curvature of the curved transitions and/or the radius of curvature thereof being significantly larger than the radius of curvature of the curved transitions. The radius of curvature of the crowned surface could be larger by at least a factor of 2 than the radius of curvature of the curved transitions. The radius of curvature may be varied along the crowned surface and/or along the curved transitions, since circular crowning would not be required.

In filter elements or filter arrangements according to the present invention, the connecting socket may consist of plastics, in particular an injection-moulded part (injection part) made of plastics, wherein preferably in connecting sockets made of plastics the spacing of the receiving groove from the front face of the connecting socket is greater than the groove width of the receiving groove. Alternatively, the connecting socket may consist of metal. In particular in a connecting socket made of metal, the spacing of the receiving groove from the front face may be less than the groove width of the receivers. In particular with a metal design of the connecting socket, it is advantageous if this connecting socket is of multi-part configuration and has at least two bent parts sealingly joined together at a joining point, wherein preferably the joining point is located in the region of the receiving groove and/or in the extension of one of the side walls of the receiving groove.

In order to simplify the plugging-in or insertion of the filter element into the associated through-opening in the retaining device, the connecting socket on the lateral surface may have a guide surface on the front face and/or an insertion bevel is provided on the internal wall of the through-opening in the retaining device, wherein it is particularly expedient if both are present and are accordingly able to cooperate; in particular in the case of a metal connecting socket it is advantageous if the front face of the connecting socket is provided with a region protruding axially over the guide surface. The region protruding on the front face may, in particular, be of annular configuration and/or the region protruding on the front face may form a contact surface for a vertical mounting of unmounted filter elements. The protruding region not only forms a contact surface but at the same time also a protective region for the initial insertion zone on the connecting socket and/or the guide surface.

Further preferably, the fluid filter may be a multi-element filter and the retaining device accordingly then has a plurality of through-openings for receiving a plurality of filter elements. The filter elements may, in particular, be filter candles, basket filter elements, multimantle filter elements or ring filter elements, and the element body itself may form the filter material or is provided with a corresponding filter material such as filter fabric, filter cloth, or the like.

The internal wall of each through-opening of the retaining device may also be provided in each case with an insertion bevel for cooperating with the front face of the connecting socket of the filter element to be fastened, in order to assist the plugging together and/or interlocking of the connecting socket and the through-opening in the retaining device.

The retaining device may consist of a perforated plate with through-openings which are configured integrally in the perforated plate and which in each case have a polygonal cross section, or the retaining device may consist of separate inserts which comprise the through-openings having a polygonal cross section and which are fastened to the perforated plate.

Each filter element may also be configured, in particular, as a filter candle with ends which are open on both sides, wherein the connecting socket with the polygonal, in particular hexagonal, cross section of the receiving groove and/or the lateral surface is arranged at one candle end, and a round socket having a circular cylindrical peripheral wall is arranged at the other candle end. In filter candles which are open on both sides, preferably the round socket may have a diameter which is smaller than the spacing between two flat portions on the connecting socket at the other end of the filter candle.

Further advantages and embodiments of filter elements or filter arrangements according to the invention are disclosed in the following description of exemplary embodiments shown schematically in the drawings, wherein the invention is not limited to the exemplary embodiments. In the drawings:

Fig. 1      shows in a schematic and highly simplified manner a multi-element fluid filter with two retaining devices and several filter candles already inserted as filter elements, which are open on both sides and designed according to the invention;

Fig. 2      shows a perspective view of a connecting socket of a filter candle-shaped filter element according to the invention;

Fig. 3      shows the connecting socket of Fig. 2 in a view from above;

Fig. 4      shows a section along IV-IV in Fig. 2;

Fig. 5      shows a plan view of the upper retaining device in Fig. 1;

Fig. 6      shows a detailed view of a through-opening in the retaining device of Fig. 5;

Fig. 7      shows a sectional view through the retaining device along VII-VII in Fig. 5;

Fig. 8      shows in a schematic and simplified manner two filter elements which are located with their connecting sockets in the associated through-openings in a retaining device, partially cut away;

Fig. 9      shows in a perspective view a slightly modified connecting socket made of plastics for filter candles according to the invention;

Fig. 10     shows a plan view of the connecting socket of Fig. 9;

Fig. 11     shows in a perspective view a retaining device with seven receivers and two appropriate filter elements with a connecting socket made of metal;

Fig. 12     shows partially a longitudinal section through the retaining device according to Fig. 11, partially cut away;

Fig. 13     shows a connecting socket preferably made of metal in a perspective view, partially cut away;

Fig. 14     shows the connecting socket of Fig. 13 in a plan view;

Fig. 15     shows the connecting socket of Fig. 14 in a sectional view along XV-XV;

Fig. 16     shows an insert for the connecting socket of Fig. 14 in a plan view, said insert being able to be inserted into through-holes of a retaining device; and

Fig. 17     shows the insert of Fig. 16 in a sectional view along XVII-XVII.

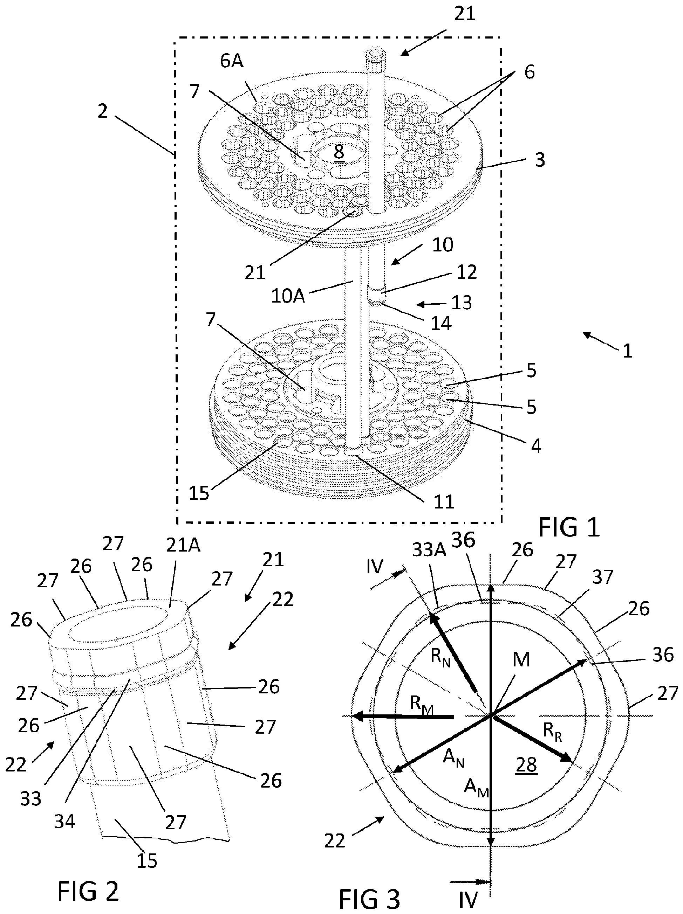

In Figure 1 a fluid filter, in particular for filtering liquids, is denoted as a whole by the reference numeral 1, wherein a housing of the fluid filter 1 is indicated schematically by reference numeral 2. The fluid filter 1 during operation is provided with a plurality of replaceable filter elements 10, in Figure 1 only a total of three thereof being shown, liquid flowing through said filter elements either from outside to inside or from inside to outside during the filtering operation of the liquid to be cleaned. To this end, on the housing 2 the fluid filter 1 has an inlet for the fluid to be filtered, in particular a liquid such as lubricating oil, liquid fuel, emulsion or water, an outlet for filtrate filtered in the fluid filter 1, and optionally an outlet for filtered-out residue, if the fluid filter 1 is provided with a backwashing device for backwashing all filter elements 10 in the filter 1. Since the fluid filter corresponding to the principal construction is known to the person skilled in the art, and the practical embodiment of the fluid filter is not significant for the invention, no further description thereof will be made here.

In the multi-element fluid filter 1 shown in figure 1, for the operation of the filter a plurality of individual filter elements 10 are used in a replaceable manner, said filter elements all having the same construction relative to one another and in the exemplary embodiment according to figure 1 being open at both filter element ends. The fluid filter 1 shown is designed to receive a total of sixty filter elements 10. For fastening the filter elements 10 two perforated plates are arranged spaced apart from one another in the fluid filter 1, namely an upper perforated plate 3 through which the individual filter elements 10 are inserted, as well as a lower perforated plate 4 into which the filter elements are inserted. In this case, the upper perforated plate 3 and the lower perforated plate 4 have a corresponding number of more than fifty through-bores 5 in the lower perforated plate 4 and through-holes 6 in the upper perforated plate 3, and each filter element 10 has a lower connecting socket 11 for the through-bores 5 in the lower perforated plate 4 and an upper connecting socket 21 for the through-holes 6 in the upper perforated plate 3. All of the through-holes 6 in the perforated plate 3 in this case have the same dimensions as one another and are arranged on a plurality of pitch circles, in order to be able to secure the largest possible number of individual filter elements 10 to the perforated plate 3 and thereby in the multi-element filter. In the exemplary embodiment shown, each disc-shaped circular perforated plate 3 has sixty through-holes 6, distributed over 3 pitch circles and each perforated plate 4 correspondingly has sixty through-holes 5 and additionally a plurality of central through-recesses 7 via which a fluid to be filtered, which flows into the housing 2 of the filter 1, may be supplied to both open candle ends of the filter candle 10 arranged between the perforated plates 3, 4. Moreover, in each case the perforated plates 3, 4 have a central opening 8, a backwashing device, not shown, for backwashing the filter elements 10 being rotatably mounted thereby and being able to be connected to a backwashing outlet in order to backwash the individual filter elements separately or in groups, as is known per se to the person skilled in the art relative to filters, which is why no further details are provided thereof here. Preferably in each case an insertion bevel 6A is provided on both sides, both on the upper face and on the lower face of the perforated plate 3 for each through-hole 6, said insertion bevel preferably consisting of a round depression on the external periphery.

In all filter elements 10 a filter element body 10A extends between the two connecting sockets 11, 21, said filter element body, for example, being able to support a filter fabric, being able to consist of said fabric, or being able to form the filter material itself, as for example is the case in slotted filter candles. In the exemplary embodiment shown in figure 1, the connecting sockets 11, 21 in each case consist of an injection-moulded part made of plastics, wherein the lower connecting sockets 11 are configured as round sockets and have a circular cylindrical lateral surface 12 with a receiving groove 13 for a sealing ring 14 which in the mounted state of the filter candles 10 is sealingly located in the through-bore 5 in the lower perforated plate 4. The through-bores 5, therefore, have a circular cylindrical cross section with a circular internal wall 15 correspondingly adapted to the diameter of the round sockets. The upper connecting sockets 21 and the through-holes 6 in the upper perforated plate 3, however, in each case have a polygonal cross section according to the present invention. The construction of the connecting sockets 21 and the associated through-holes 6 is now explained with reference to figures 2 to 8.

Figure 2 shows a detailed view of the connecting socket 21 at the upper end of the element body 10A. The connecting socket 21 on the lateral surface 22, spaced apart from the upper front face 21A of the connecting socket 21, has a receiving groove 33 for an O-ring 34 as a sealing ring. The connecting socket 21 has on the outer periphery a hexagonal cross section with a total of six flat portions 26 arranged so as to be distributed uniformly over the periphery, wherein in each case a curved transition 27 is formed between two adjacent flat portions 26, said curved transition preferably having a uniform radius of curvature which remains the same over the length of the curved transition 27. Figure 3 shows in a particularly clear manner the alternate configuration of flat portions 26 and curved transitions 27 on the lateral surface 22 of the connecting socket 21. Figure 3 also makes it possible to identify by means of the dashed line that the groove base 33A of the receiving groove 33 also has a hexagonal cross section with flat portions 36 and curved transitions 37 alternating with one another, wherein in each case a flat portion 26 on the lateral surface 22 extends parallel and at the same distance from a flat portion 36 on the groove base 33, and a curved portion 27 on the lateral surface 22 extends parallel and at the same distance from a curved portion 37 on the groove base 33A. The internal opening 28 of the connecting socket 21, however, is circular with a radius of curvature $R_R$ about the central longitudinal axis M of the filter element. Each of the curved transitions 37 of the groove base 33A has a radius of curvature $R_N$ which is smaller than half the spacing $A_N$ between two flat portions 36 of the groove base 33A opposing one another, and each curved transition 27 of the lateral surface 22 has a radius of curvature $R_M$ which is smaller than half the spacing $A_M$ between two opposing flat portions 26 of the lateral surface 22. The radii of curvature $R_N$ for the curved portions 37 of the groove base 33A and $R_M$ for the curved portions 27 of the lateral surface 22 in each case have a common origin which is located at a corresponding distance from the central longitudinal axis M of the filter element. The respective curved portions 27 of the lateral surface located adjacent to one another on a partial curve and the curved portions 37 of the groove base 33A thus extend parallel to one another and at a uniform distance from one another.

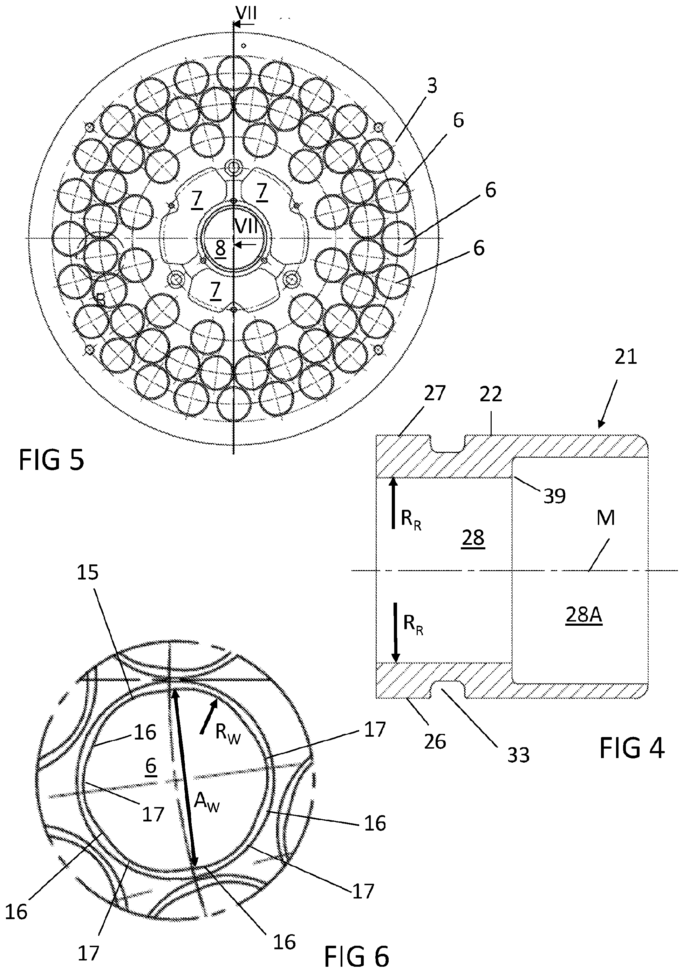

The embodiment according to the invention with a hexagonal cross section is also manifested by the different thickness ratios of the wall thickness of the connecting socket 21 in the region of the curved portion 27 of the lateral surface 22 as shown in the upper half of figure 4, and in the region of the flat portions 26 as shown in the lower half of figure 4. The receiving groove 33 configured in the lateral surface 22, however, has a uniform groove depth and groove width over the periphery. In the connecting socket 21 according to Figures 2 to 4, the internal opening 28 widens toward the rear end (right-hand end in Figure 4) via a step 39 so that here and in the wider region 28A of the internal opening 28, the element body of the filter element may optionally be attached and secured to a separate casing made of filter fabric.

Correspondingly adapted to the dimensions of the lateral surface 22 and/or the groove base 33A of the connecting socket 21, each through-hole 6 in the perforated plate 3, which is provided for receiving the connecting socket, has a hexagonal cross section on the internal wall 15, differing from a circular cylindrical design, with in each case six flat portions 16 and six curved transitions 17 which alternate with one another in the peripheral direction and in each case have the same dimensions as one another, so that the symmetry of the internal wall 15 is provided in the peripheral direction as is clear, in particular, from Figures 5 and 6. In order to permit the mounting of the filter candles according to the invention, the curved transitions 17 of the internal wall of the through-holes 6 have a radius of curvature $R_W$ which is smaller than half the spacing $A_W$ of two opposing flat portions 16, wherein in each case the spacing $A_W$ and radius of curvature $R_W$ of the internal wall are slightly larger than the spacing ($A_M$, Fig. 3) and radius of curvature ($R_M$, Fig. 3) of the lateral surface (22, Figure 3).

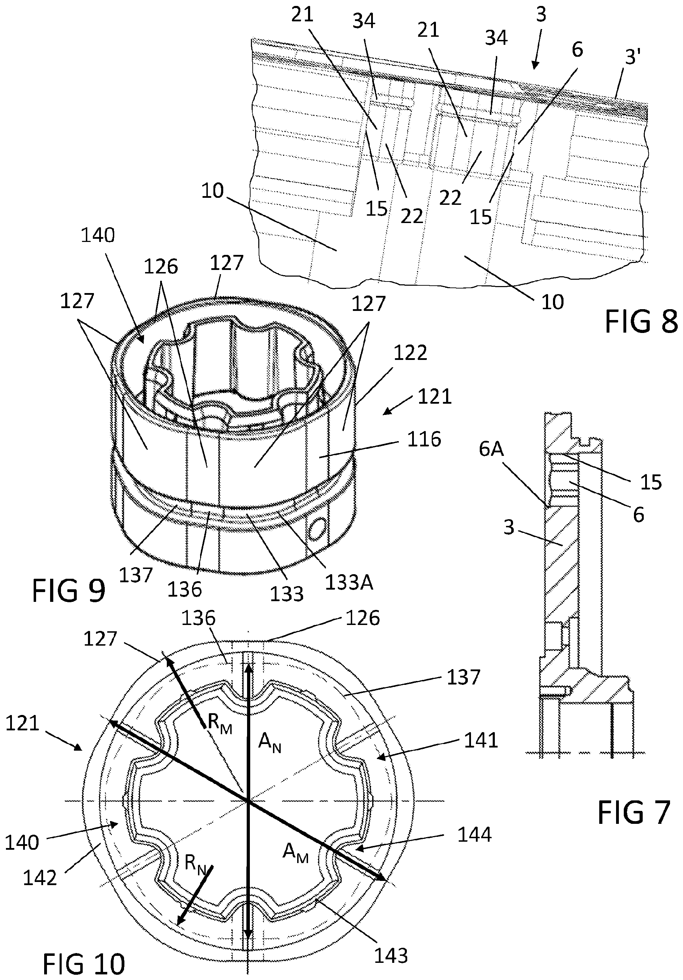

Figure 8 shows the mounting position of two adjacent upper connecting sockets 21 of correspondingly adjacent filter elements 10 in the adjacent through-holes 6 of the perforated plate 3. As may be clearly identified, in each case the sealing ring, which is formed by a round O-ring 34 and is arranged inside the respective groove 33 of the connecting socket 21, is spaced apart from the respective front faces of the perforated plate 3 by several millimetres and is located entirely inside the respective through-opening 6 and, therefore, is correspondingly located in the gap sealing region between the outer periphery of the lateral surface 22 of the connecting socket 21 and the internal wall 15 of the through-holes 6.

Figures 9 and 10 show a second exemplary embodiment of a connecting socket 121 preferably consisting of plastics for filter elements, not otherwise shown in more detail. In the case of the connecting socket 121 the lateral surface 122 also has a hexagonal cross section with six flat portions 126 and curved portions 127 respectively alternating with one another, and the groove base 133A of the receiving groove 133 in the lateral surface 122 also has a hexagonal cross section with in each case flat portions 136 and curved portions 137 respectively alternating with one another. The curved portions 137 of the groove 133 have in each case the radius of curvature $R_N$ and the curved portion 127 of the lateral surface 122 has the radius of curvature $R_M$ and two flat portions 126 opposing one another of the lateral surface 122 have the spacing $A_M$, and two opposing flat portions 136 of the groove base 133A have the spacing $A_N$. The ratios are in turn such that the respective radius of curvature $R_N$ and/or $R_M$ in each case is preferably considerably less than half the spacing $A_N$ and/or $A_M$, wherein the ratio $A_i / R_i$ (where i=N, M) is preferably between approximately 2.3 and 3.6. In contrast to the previous exemplary embodiment, the connecting socket 121 also has on the rear face a clamping or retaining structure 140 for the element body. The connecting socket 121 is particularly well suited to an element body having a preferably separate support body for a filter fabric, wherein the support body in this case may have a plurality of helical and/or spiral-shaped struts extending between both connecting sockets of a filter candle, for example, said struts forming intersections and apertures being formed therebetween in order to support a filter fabric securely on the outer periphery of the support body, also relative to high compressive loads. In each case only the associated ends of the struts of the support body are thus secured in the clamping or retaining structure 140. A corresponding support body is disclosed, for example, in DE 202006001793U of the applicant, the disclosure thereof being taken as a further reference. The retaining structure 140 in this case has a clamping gap 141 between an external wall projection 142, the external surface thereof forming the lateral surface 122 with the hexagonal cross section, and said external wall projection being circular on the internal periphery, and an internal wall projection 143 located spaced apart therefrom with a number of recesses 144 corresponding to the number of spiral struts. The support body may in this case have six spirals/struts and in each case one of the six recesses 144 opposes a flat portion 126 on the lateral surface 122. In the exemplary embodiment shown, the clamping gap has a smaller depth than the spacing of the groove 133 from the rear end; but in the case of a correspondingly larger thickness of the connecting socket and/or the wall projection, the groove could also be configured in the radial extension of the clamping gap in the lateral surface .

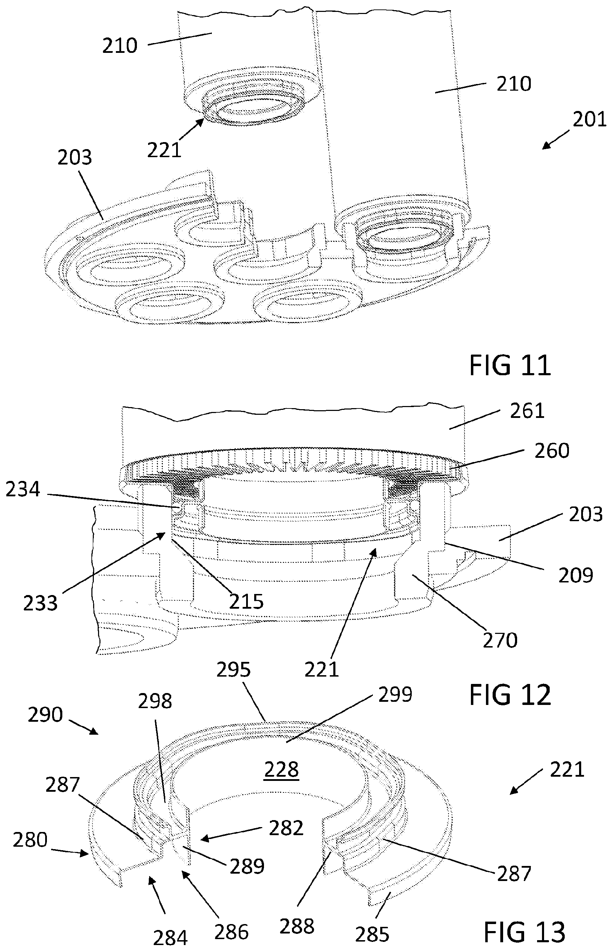

Figures 11 to 17 show a further exemplary embodiment of a multi-element fluid filter 201 with filter elements 210 which are preferably open on only one side. The fluid filter 201, therefore, requires only one perforated plate 203 which in the exemplary embodiment shown is provided for receiving a total of seven individual filter elements 210, wherein six filter elements 210 are arranged on an outer pitch circle and the seventh filter element 210 is arranged centrally therebetween. The individual filter elements 210 overall have a substantially larger diameter and a longer length and thus also a considerably larger filtering surface than in the previous exemplary embodiment, and they have in the exemplary embodiment shown a metal support body such as for example a perforated plate (not shown), a pleated filter means 260 being supported on the outer periphery thereof and optionally being surrounded by a protective sleeve 261. In the filter elements 210 a connecting socket 221 which preferably consists of a metal is used for each filter element 210, and none of the connecting sockets 221 cooperates directly with a through-hole in the perforated plate 203 forming the retaining device on the filter side, but seven stepped through-openings 209 are provided in the perforated plate 207, in each case an insert 270 being sealingly inserted therein in a fluid-tight manner and said insert in each case cooperating with the connecting socket 221 of a filter element 210.

Firstly, the construction of the connecting sockets 221 is now explained with reference to Figures 13 to 15. The connecting sockets 221 in each case consist of metal and namely in this case of bent parts 280, 290 which, for example, in each case are produced from sheet metal rings which are shaped by deep-drawing and which are sealingly connected together at a joining point 282. Both bent parts 280, 290 are configured in an annular manner with a central median axis M, wherein the bent part 280 on the rear face and remote from the joining point 282 has an annular surface 284 which extends perpendicular to the median axis M, in the mounted state as shown in Figure 12 pleated filter means 260 being supported thereagainst and being able to bear against the front face. A circular cylindrical annular collar 285 adjoins the annular surface 284, on the mounted filter element said annular collar being able to bear externally against the pleated filter cloth, or a protective and supporting element surrounding this filter cloth, and preferably extending slightly conically relative to the median axis M. Inwardly a U-shaped bent-back structure 286 adjoins the annular surface 284, said bent-back structure having a radial outer wall projection 287, an intermediate projection 288 extending at right-angles thereto, and an internal wall projection 289 extending again at right-angles thereto. The internal wall projection 289 forms on the connecting socket 221 a partial portion of the peripheral wall of the internal opening 228, which is configured to be circular cylindrical in the case of the connecting socket 221.

A second bent part 290 is connected to the bent part 280, said second bent part in turn being configured to be annular and having a circular cylindrical internal wall projection 299 which merges with an intermediate projection 298 extending angled back at right-angles thereto, said intermediate projection extending so as to be aligned perpendicular to a central axis M of the connecting socket 221. The intermediate projection 298 in turn merges with a first outer wall projection 297, extending angled back at right-angles thereto, which merges with a transition projection 293 outwardly angled back at right-angles thereto and an outer edge projection 295 in turn extending angled back at right-angles thereto. Viewed parallel to the central axis M, the internal wall projection 299 axially projects over the outer edge projection 295.

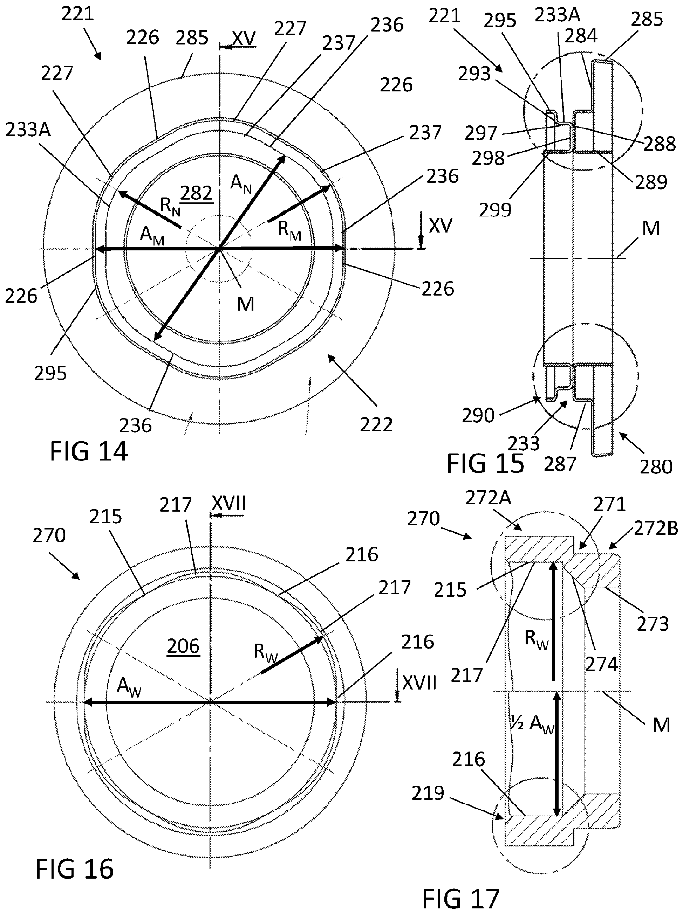

In the mounted state of the two bent parts 280, 290, the two intermediate projections 288, 298 are located flat against one another and the two intermediate projections 298, 288 form the joining surface on which the two bent parts 280, 290 are sealingly connected together, in particular are welded together by means of laser welding in a fluid-tight manner. The two internal wall projections 289, 299 in this case extend aligned and plane-parallel to one another and thus form the peripheral wall of the internal opening 228 of the connecting socket 221. In the mounted state of the two sheet metal parts 280, 290 the groove 233 of the connecting socket is produced between the transition projection 293, the first outer wall projection 297 of the plate part 290, and the partial portion of the intermediate projection 288 on the plate part 280 which protrudes radially over the joining surface between the two plate parts 280, 290 and/or protrudes over the outer wall projection 297 of the plate part 290. The wall projection 298 on the bent parts 290 is correspondingly shorter than the wall projection 288 on the bent part 280. The lateral surface of the first outer wall projection 297 forms at the same time the groove base 233A of the groove 233. The wall projection 288, partially forming the sealing surface, at the same time forms one of the side walls of the receiving groove 233 for the sealing ring in the portion which protrudes radially over the wall projection 298. According to the invention, the first outer wall projection 297 forming the groove base 233A, the edge projection 295 and the outer wall projection 287 aligned in the extension thereof, do not have a circular cross section but a hexagonal cross section, with in each case alternating curved portions 227 and flat portions 226 arranged so as to be offset relative to one another over the periphery, on the external lateral surface 222 of the connecting socket 221 formed by the projections 295, 287, and accordingly also curved portions 237 and flat portions 236 on the wall projection 297 forming the groove base 233A as, in particular, is clear in Fig. 14. In each case, two opposing flat portions 226 of the external lateral surface 222 accordingly have the spacing $A_M$, and in each case two opposing flat portions 236 of the groove base 233A accordingly have the spacing $A_N$. The curved portions 237 of the groove base 233A have in each case the radius of curvature $R_N$ and the curved portions 227 of the external lateral surface have the radius of curvature $R_M$. The origin of both radii of curvature coincides but is not located on the longitudinal axis M of the connecting socket 221, being located at a radial spacing therefrom. The wall projections 287 on the rear bent part 280 in the insertion direction preferably extend parallel to the median axis M, but the front edge projection 295 may extend slightly angled back inwardly relative to the median axis M in order to simplify the insertion of the connecting sockets 221 in the correspondingly designed through-openings on the retaining device on the filter side.

Figs. 16 and 17 show suitable through-openings 206, wherein the through-openings 206 co-operating with the connecting sockets configured according to the invention on the filter elements, in the exemplary embodiment in Figs. 11 to 17 are not directly configured in a perforated plate but are configured on separate inserts 270. The inserts 270 are circular on their external periphery and have two portions 272A and 272B defined from one another by a step 271. The portion 272B is adapted in order to be inserted into corresponding through-bores or through-passages in the retaining plate (Fig. 11, 203), wherein the step 271 then bears against the upper face of the stepped through-passage (209, Fig. 12). The internal periphery 273 of the smaller portion 272B of the inserts 270 is also circular and merges via a transition bevel 274 with that portion 272A, the internal wall 215 thereof being configured for receiving with anti-twist protection the connecting sockets (221, Figure 11) arranged on the filter elements and shaped according to the invention. The portion 272A thus forms the actual receiving region for the connecting socket and serves as a sealing surface and/or sealing mating surface for the sealing ring (O-ring) in the receiving groove on the associated connecting socket. Corresponding to the embodiment according to the invention, the internal wall 215 in the portion 272A accordingly has a hexagonal cross section with in each case curved portions 217 and flat portions 216 respectively alternating with one another in the peripheral direction. In each case two opposing flat portions 216 of the internal wall 215 have the spacing $A_W$ and the curved portions 217 in each case have the radius of curvature $R_W$. The front face of the larger portion 272A is provided at the transition with the internal wall 215 with an insertion bevel 219 in order to provide additional assistance for the insertion of the front face of the connecting socket (221, Fig. 11). Accordingly, the insertion bevel 219 and the edge projection (295, Fig. 15), which is also bevelled and extends inwardly, are guided during the mounting process, whereby even with relatively heavy or bulky filter elements the associated mating surfaces may be located in a simple and secure manner. In the mounted state, as may be primarily identified in Fig. 12, the sealing ring 234 is located in the associated receiving groove 233 in the connecting socket 221 and is pressed all around with a uniform contact pressure against the internal wall 215 of the insert 270 and correspondingly ensures a fluid-tight seal between the connecting socket 221 and the retaining device 203.

The following table advantageously shows dimensions (in mm) for the different spacings and radii without limiting the invention thereto:

| Variant | $A_M$ | $R_M$ | $A_N$ | $R_N$ | $R_R$ | $A_W$ | $R_W$ |
|---|---|---|---|---|---|---|---|
| I | 18,8 | 6 | 16,2 | 4,7 | 6,8 | 19 | 6,1 |
| II | 108,6 | 41,8 | 99,8 | 36,4 | 40 | 109 | 42 |
| III | 135,1 | 55,1 | 126,3 | 49,7 | 54 | 135,5 | 55,3 |
| IV | 32,2 | 12,25 | 27,7 | 10 | 11,5 | 32,4 | 12,35 |

For the person skilled in the art, numerous modifications which are intended to fall within the protected scope of the dependent claims are disclosed in the above description. The invention is not limited, in particular, to the exemplary embodiments shown and/or the dimensions provided in the above table for spacings and radii. The use of a hexagonal cross section, with in each case six flat portions and six curved portions which are distributed in a uniform and symmetrical manner over the periphery, forms the preferred exemplary embodiment, even if other cross-sectional shapes might be possible. If bent parts made of sheet metal as connecting sockets are disclosed in the figures and the associated description, it might also be possible to produce corresponding connecting sockets, preferably in one piece from plastics. These and further modifications are obvious to the person skilled in the art from the above description.

**Claims**

1. Filter element for fluid filters, having an element body comprising a longitudinal axis, containing a filter means through which fluid is able to flow, and having at least one connecting socket (21; 121; 221) which is open on the front face at one end of the element body for the releasable fastening of the filter element to a through-opening in a retaining device in the fluid filter, wherein the connecting socket (21; 121; 221) comprises a lateral surface (22; 122; 222) having a polygonal cross section with flat portions (26; 126; 226) and curved transitions (27; 127; 227) alternating with one another and a bearing surface for a sealing ring, which bearing surface is having a polygonal cross section with flat portions (36; 136; 236) and curved transitions (37; 137; 237) alternating with one another, **characterized in that** a receiving groove (33; 133; 233) is provided for the sealing ring on the outer periphery of the lateral surface of the connecting socket (21; 121; 221), the groove base (33A; 133A; 233A) of said receiving groove provides an inner radial bearing surface for the sealing ring and is having the polygonal cross section with the flat portions (36; 136; 236) and the curved transitions (37; 137; 237) alternating with one another, wherein the sealing ring in the groove base serves for cooperating with an internal wall of the through-opening in the retaining device and is an O-Ring.

2. Filter element according to Claim 1, **characterized in that** the connecting socket (21; 221) has an internal inner opening (28, 228) being circular with a radius of curvature around the central longitudinal axis (M) of the filter element, and preferably being circular cylindrical.

3. Filter element according to Claim 1 or 2, **characterized in that** the groove base (33A; 133A; 233A) has an even number of flat portions (36; 136; 236) of similar type to one another, and that the lateral surface (22; 122; 222) has an even number of flat portions (26; 126; 226) of similar type to one another.

4. Filter element according to any of Claims 1 to 3, **characterized in that** the groove base (33A; 133A; 233A) and the outer lateral surface in each case have a hexagonal cross section with six flat portions ( 36, 26; 126, 136; 226, 236) and six curved transitions ( 27, 37; 127, 137; 227, 237), wherein the flat portions ( 26; 36) oppose one another in pairs and in parallel at the spacing ($A_i$) and the curved transitions ( 27; 37) on the groove base (33A) and on the outer lateral surface (22) in each case have a uniform radius of curvature ($R_i$) relative to one another, wherein for the ratio of the spacing relative to the radius of curvature the following applies:

$$2 < A_i/R_i \leq 5,$$

and preferably the following applies:

$$2.3 \leq A_i/R_i \leq 3.6$$

5. Filter element according to Claim 4, **characterized in that** in each case the radius of curvature $R_i$ of a curved transition on the lateral surface and the radius of curvature $R_i$ of a curved transition on the groove base are concentric relative to one another and have a common central point.

6. Filter element according to one of the preceding claims, **characterized in that** the flat portions are partially planar or **in that** the flat portions have a surface which is curved in a crowned manner.

7. Filter element according to one of the preceding claims, **characterized in that** the connecting socket (21; 121) which is made of plastics in particular consists of a plastics injection-moulded part, wherein the spacing of the receiving groove from the front face of the connecting socket is greater than the groove width of the receiving groove, wherein preferably, the connecting socket (121) has a clamping or fastening region (140) for the element body or a support body for the element body.

8. Filter element according to one of Claims 1 to 5, **characterized in that** the connecting socket (221) consists of metal, wherein the connecting socket (221) is of multipart configuration and has at least two bent parts (280; 290) sealingly joined together at a joining point, wherein the joining point (282) is preferably located in the region of the receiving groove provided on the outer lateral surface of the connecting socket (221).

9. Filter element according to Claim 8, **characterized in that** the connecting socket (221) on the outer lateral surface (222) has a guide surface (295) on the front face for cooperating with an insertion bevel on the internal wall of a through-opening in a retaining device, wherein the front face of the connecting socket is preferably provided with a region (299) protruding axially over the guide surface, wherein preferably, the region (299) protruding from the front face is of annular configuration and/or the region protruding from the front face forms a contact surface for a vertical mounting of unmounted filter elements.

10. Filter element according to one of the preceding claims, **characterized in that** each filter element (10) is configured as a filter candle with ends which are open on both sides, wherein the connecting socket (21) with the polygonal, in particular hexagonal, cross section of the receiving groove and the lateral surface is arranged at one candle end, and a round socket (22) having a circular cylindrical peripheral wall is arranged at the other candle end.

11. Filter arrangement having a fluid filter which comprises a housing and at least one retaining device arranged in the housing with a through-opening (6; 106; 206) comprising an internal wall for fastening a filter element, as well as at least one filter element (10; 210), **characterized in that** the filter element is in accordance with any of claims 1 to 10, and the filter element is fastened in the through-opening of the retaining device by an O-Ring as sealing ring.

12. Filter arrangement according to Claim 11, **characterized in that** the groove base (33A; 133A; 233A) and the internal wall in each case have an even number of flat portions of similar type to one another, wherein the groove base (33A; 133A; 233A) and the internal wall (15; 215) and outer periphery of the lateral surface in each case have a hexagonal cross section with six flat portions (16, 36, 26; 116, 126, 136; 216, 226, 236) and six curved transitions (17, 27, 37; 117, 127, 137; 217, 227, 237), wherein more preferably, the flat portions ( 26; 36) oppose one another in pairs and in parallel at the spacing ($A_i$) and the curved transitions ( 27; 37) on the groove base (33A), the internal wall (15) and the lateral surface (22) in each case have a uniform radius of curvature ($R_i$) relative to one another, wherein for the ratio of the spacing relative to the radius of curvature the following applies:

$$2 < A_i/R_i \leq 5,$$

or

$$2.3 \leq A_i/R_i \leq 3.6$$

13. Filter arrangement according to claim 11 or 12, **characterized in that** the fluid filter is a multi-element filter and the retaining device has a plurality of through-openings for receiving a plurality of filter elements according to claims 1 to 10.

14. Filter arrangement according to any one of claims 11 to 13, **characterized in that** the internal wall of the retaining device (203; 270) in each case is provided with an insertion bevel (6A; 219) for cooperating with the front face of the connecting socket (21; 221) of the filter element to be fastened.

15. Filter arrangement according to any one of claims 11 to 14, **characterized in that** the retaining device consists of a perforated plate (3) with through-openings (6) configured integrally in the perforated plate, in each case having the polygonal cross section, or **in that** the retaining device consists of separate inserts (270) which comprise the through-openings having a polygonal cross section and which are fastened to a perforated plate (203).

**Patentansprüche**

1. Filterelement für Fluidfilter, mit einem eine Längsachse aufweisenden, ein durchströmbares Filtermittel enthaltenden Elementkörper und mit wenigstens einer stirnseitig offenen Anschlussbuchse (21; 121; 221) an einem Ende des Elementkörpers zum lösbaren Befestigen des Filterelements an einer Durchgangsöffnung in einer Halteeinrichtung im Fluidfilter, wobei die Anschlussbuchse (21; 121; 221) eine Mantelfläche (22; 122; 222), die einen polygonalartigen Querschnitt mit einander abwechselnden Flachabschnitten (26; 126; 226) und Bogenübergängen (27; 127; 227) hat, und eine Anlagefläche für einen Dichtring zum Zusammenwirken mit einer Innenwandung der Durchgangsöffnung aufweist, wobei die Anlagefläche einen polygonalartigen Querschnitt mit einander abwechselnden Flachabschnitten (36; 136; 236) und Bogenübergängen (37; 137; 237) hat, **dadurch gekennzeichnet, dass** für den Dichtring am Außenumfang der Mantelfläche der Anschlussbuchse (21; 121; 221) eine Aufnahmenut (33; 133; 233) vorgesehen ist, und der Nutgrund (33A; 133A; 233A) dieser Aufnahmenut eine innere radiale Anlagefläche für den Dichtring bildet und den polygonalartigen Querschnitt mit den einander abwechselnden Flachabschnitten (36; 136; 236) und Bogenübergängen (37; 137; 237) aufweist, wobei der Dichtring in der Aufnahmenut zum Zusammenwirken mit einer Innenwandung der Durchgangsöffnung der Halteeinrichtung dient und ein O-Ring ist.

2. Filterelement nach Anspruch 1, **dadurch gekennzeichnet, dass** die Anschlussbuchse (21; 221) eine Innenöffnung (28) aufweist, die kreisrund ist mit einem Rundungsradius um die Mittellängsachse M des Filterelementes herum, und die vorzugsweise kreiszylindrisch ist.

3. Filterelement nach Anspruch 2, **dadurch gekennzeichnet, dass** der Nutgrund (33A; 133A; 233A) eine geradzahlige Anzahl von zueinander gleichartigen Flachabschnitten (36; 136; 236) aufweist, und dass die Mantelfläche (22; 122; 222) eine geradzahlige Anzahl von zueinander gleichartigen Flachabschnitten (26; 126; 226) hat.

4. Filterelement nach einem der Ansprüche 1 bis 3, **dadurch gekennzeichnet, dass** der Nutgrund (33A; 133A; 233A) und die äußere Mantelfläche jeweils einen hexagonalartigen Querschnitt mit sechs Flachabschnitten (36, 26; 126, 136; 226, 236) und sechs Bogenübergängen (27, 37; 127, 137; 227, 237) aufweisen, wobei die Flachabschnitte (26; 36) einander paarweise parallel im Abstand ($A_i$) gegenüberliegen und die Bogenübergänge (27; 37) am Nutgrund (33A) und an der äußeren Mantelfläche (22) jeweils untereinander einen einheitlichen Krümmungsradius ($R_i$) aufweisen, wobei für das Verhältnis von Abstand zu Krümmungsradius gilt:

$$2 < A_i/R_i \leq 5,$$

und vorzugsweise gilt:

$$2,3 \leq A_i/R_i \leq 3,6$$

5. Filterelement nach Anspruch 4, **dadurch gekennzeichnet, dass** jeweils der Krümmungsradius $R_i$ eines Bogenübergangs an der Mantelfläche und der Krümmungsradius $R_i$ eines Bogenübergangs am Nutgrund konzentrisch zueinander sind und einen gemeinsamen Mittelpunkt aufweisen.

6. Filterelement nach einem der vorhergehenden Ansprüche, **dadurch gekennzeichnet, dass** die Flachabschnitte partiell eben sind, oder dass die Flachabschnitte eine ballig gekrümmte Oberfläche aufweisen.

7. Filterelement nach einem der vorhergehenden Ansprüche, **dadurch gekennzeichnet, dass** die Anschlussbuchse (21; 121) aus Kunststoff, insbesondere aus einem Kunststoffspritzgussteil, besteht, wobei der Abstand der Aufnahmenut von der Stirnseite der Anschlussbuchse größer ist als die Nutbreite der Aufnahmenut, wobei vorzugsweise die Anschlussbuchse (121) einen Klemm- oder Befestigungsbereich (140) für den Elementkörper oder einen Stützkörper für den Elementkörper aufweist.

8. Filterelement oder Filteranordnung nach einem der Ansprüche 1 bis 5, **dadurch gekennzeichnet, dass** die Anschlussbuchse (221) aus Metall besteht, wobei die Anschlussbuchse (221) mehrteilig ausgebildet ist und wenigstens zwei an einer Fügestelle abgedichtet zusammengefügte Biegeteile (280; 290) aufweist, wobei vorzugsweise die Fügestelle (282) im Bereich der Aufnahmenut liegt, die an der äußeren Mantelfläche der Anschlussbuchse (221) vorgesehen ist.

9. Filterelement nach Anspruch 8, **dadurch gekennzeichnet, dass** die Anschlussbuchse (221) an der äußeren Mantelfläche (222) eine stirnseitige Führungsfläche (295) zum Zusammenwirken mit einer Einführungsschräge an der Innenwandung der Durchgangsöffnung in der Halteeinrichtung aufweist, wobei vorzugsweise die Stirnseite der Anschlussbuchse mit einem axial über die Führungsfläche vorspringenden Bereich (299) versehen ist, wobei vorzugsweise der an der Stirnseite vorspringende Bereich (299) ringförmig ausgebildet ist und/oder der an der Stirnseite vorspringende Bereich eine Aufstandsfläche für eine stehende Lagerung von nicht montierten Filterelemente bildet.

10. Filterelement nach einem der vorhergehenden Ansprüche, **dadurch gekennzeichnet, dass** jedes Filterelement (10) als Filterkerze mit beidseitig offenen Enden ausgebildet ist, wobei die Anschlussbuchse (21) mit polygonartigem, insbesondere hexagonalartigem, Querschnitt der Aufnahmenut und der Mantelfläche an einem Kerzenende angeordnet ist, und am anderen Kerzenende eine Rundbuchse (22) mit kreiszylindrischer Umfangswand angeordnet ist.

11. Filteranordnung mit einem Fluidfilter, der ein Gehäuse und wenigstens eine im Gehäuse angeordneten Halteeinrichtung mit einer eine Innenwandung aufweisenden Durchgangsöffnung (6; 106; 206) zur Befestigung eines Filterelements aufweist, sowie mit wenigstens einem Filterelement (10; 210) versehen ist, **dadurch gekennzeichnet, dass** das Filterelement gemäß einem der Ansprüche 1 bis 10 ausgebildet ist, und dass das Filterelement an der Durchgangsöffnung der Halteeinrichtung über einen O-Rings als Dichtring befestigt ist.

12. Filteranordnung nach Anspruch 11, **dadurch gekennzeichnet, dass** der Nutgrund (33A; 133A; 233A) und die äußere Mantelfläche jeweils eine geradzahlige Anzahl von zueinander gleichartigen Flachabschnitten aufweist, wobei der Nutgrund (33A; 133A; 233A) und die Innenwandung (15; 215) und die äußere Mantelfläche jeweils einen hexagonalartigen Querschnitt mit sechs Flachabschnitten (16, 36, 26; 116, 126, 136; 216, 226, 236) und sechs Bogenübergängen (17, 27, 37; 117, 127, 137; 217, 227, 237) aufweisen, wobei insbesondere vorzugsweise die Flachabschnitte (26; 36) einander paarweise parallel im Abstand ($A_i$) gegenüberliegen und die Bogenübergänge (27; 37) am Nutgrund (33A), an der Innenwandung (15) und an der äußeren Mantelfläche (22) jeweils untereinander einen einheitlichen Krümmungsradius ($R_i$) aufweisen, wobei für das Verhältnis von Abstand zu Krümmungsradius gilt:

$$2 < A_i/R_i \leq 5,$$

oder

$$2,3 \leq A_i/R_i \leq 3,6$$

13. Filteranordnung nach einem der Ansprüche 11 oder 12, **dadurch gekennzeichnet, dass** der Fluidfilter ein Multielement-Filter ist und die Halteeinrichtung mehrere Durchgangsöffnungen zur Aufnahme mehrerer Filterelemente der Ansprüche 1 bis 10 aufweist.

14. Filteranordnung nach einem der Ansprüche 11 bis 13, **dadurch gekennzeichnet, dass** die Innenwandung der Halteeinrichtung (203; 270) jeweils mit einer Einführungsschräge (6A; 219) zum Zusammenwirken mit der Stirnseite der Anschlussbuchse (21; 221) des zu befestigenden Filterelementes versehen ist.

15. Filteranordnung nach einem der Ansprüche 11 bis 13, **dadurch gekennzeichnet, dass** die Halteeinrichtung aus einer Lochplatte (3) mit integral in der Lochplatte ausgebildeten, jeweils den polygonartigen Querschnitt aufweisenden Durchgangsöffnungen (6) besteht, oder dass die Halteeinrichtung aus separaten, die Durchgangsöffnungen mit polygonartigem Querschnitt aufweisenden Einsatzstücken (270) besteht, die an einer Lochplatte (203) befestigt sind.

## Revendications

1. Élément filtrant pour filtres de fluide, comprenant un corps d'élément présentant un axe longitudinal, contenant un moyen filtrant à travers lequel un fluide peut s'écouler, et ayant au moins une douille de raccordement (21 ; 121 ; 221) qui est ouverte sur la face avant au niveau d'une extrémité du corps d'élément pour la fixation amovible de l'élément filtrant à une ouverture traversante dans un dispositif de retenue dans le filtre de fluide, la douille de raccordement (21 ; 121 ; 221) comprenant une surface latérale (22 ; 122 ; 222) présentant une section transversale polygonale avec des parties plates (26 ; 126 ; 226) et des transitions incurvées (27 ; 127 ; 227) alternant les unes avec les autres et une surface d'appui pour une bague d'étanchéité, laquelle surface d'appui présente une section transversale polygonale avec des parties plates (36 ; 136 ; 236) et des transitions incurvées (37 ; 137 ; 237) alternant les unes avec les autres, **caractérisé en ce qu'**une rainure de réception (33 ; 133 ; 233) est fournie pour la bague d'étanchéité sur la périphérie extérieure de la surface latérale de la douille de raccordement (21 ; 121 ; 221), la base de rainure (33A ; 133A ; 233A) de ladite rainure de réception fournit une surface d'appui radiale intérieure pour la bague d'étanchéité et présente une section transversale polygonale avec les parties plates (36 ; 136 ; 236) et les transitions incurvées (37 ; 137 ; 237) alternant les unes avec les autres, la bague d'étanchéité dans la base de rainure servant à coopérer avec une paroi interne de l'ouverture traversante dans le dispositif de retenue et étant un joint torique.

2. Élément filtrant selon la revendication 1, **caractérisé en ce que** la douille de raccordement (21 ; 221) présente une ouverture intérieure interne (28, 228) circulaire avec un rayon de courbure autour de l'axe longitudinal central (M) de l'élément filtrant, et de préférence cylindrique circulaire.

3. Élément filtrant selon la revendication 1 ou 2, **caractérisé en ce que** la base de rainure (33A ; 133A ; 233A) comprend un nombre pair de parties plates (36 ; 136 ; 236) de type similaire les unes aux autres et **en ce que** la surface latérale (22 ; 122 ; 222) présente un nombre pair de parties plates (26 ; 126 ; 226) de type similaire les unes aux autres.

4. Élément filtrant selon l'une quelconque des revendications 1 à 3, **caractérisé en ce que** la base de rainure (33A ; 133A ; 233A) et la surface latérale extérieure présentent respectivement une section transversale hexagonale avec six parties plates (36, 26 ; 126, 136 ; 226, 236) et six transitions incurvées (27, 37 ; 127, 137 ; 227, 237), les parties plates (26 ; 36) se faisant face par paires et parallèlement au niveau de l'espacement ($A_i$) et les transitions incurvées (27 ; 37) sur la base de rainure (33A) et sur la surface latérale extérieure (22) dans chaque cas présentant un rayon de courbure ($R_i$) uniforme les unes par rapport aux autres, le rapport entre l'espacement et le rayon de courbure étant le suivant :

$$2 < A_i/R_i \leq 5,$$

et de préférence étant le suivant :

$$2,3 \leq A_i/R_i \leq 3,6$$

5. Élément filtrant selon la revendication 4, **caractérisé en ce que** le rayon de courbure $R_i$ d'une transition incurvée sur la surface latérale et le rayon de courbure $R_i$ d'une transition incurvée sur la base de rainure sont concentriques l'un par rapport à l'autre et présentent un point central commun.

6. Élément filtrant selon l'une quelconque des revendications précédentes, **caractérisé en ce que** les parties plates sont partiellement planes ou **en ce que** les parties plates présentent une surface qui est incurvée comme une couronne.

7. Élément filtrant selon l'une quelconque des revendications précédentes, **caractérisé en ce que** la douille de raccordement (21 ; 121) qui est en matière plastique est constituée en particulier d'une pièce moulée par injection en matière plastique, l'espacement entre la rainure de réception et la face avant de la douille de raccordement étant supérieure à la largeur de la rainure de réception, de préférence la douille de raccordement (121) présentant une zone de serrage ou de fixation (140) pour le corps d'élément ou un corps d'appui pour le corps d'élément.

8. Élément filtrant selon l'une quelconque des revendications 1 à 5, **caractérisé en ce que** la douille de raccordement (221) est en métal, la douille de raccordement (221) ayant une configuration en plusieurs parties et présentant au moins deux parties coudées (280 ; 290) reliées entre elles de manière étanche au niveau d'un point de jonction, le point de jonction (282) se trouvant de préférence dans la zone de la rainure de réception située sur la surface latérale extérieure de la douille de raccordement (221).

9. Élément filtrant selon la revendication 8, **caractérisé en ce que** la douille de raccordement (221) sur la surface latérale extérieure (222) présente une surface de guidage (295) sur la face avant pour coopérer avec un chanfrein d'insertion sur la paroi intérieure d'une ouverture traversante dans un dispositif de retenue, la face avant de la douille de raccordement étant de préférence pourvue d'une zone (299) axialement en saillie sur la surface de guidage, la région (299) faisant saillie de la face avant étant de configuration annulaire et/ou la région faisant saillie de la face avant formant une surface de contact pour un montage vertical d'éléments filtrants non montés.

10. Élément filtrant selon l'une quelconque des revendications précédentes, **caractérisé en ce que** chaque élément filtrant (10) est réalisé sous forme de bougie filtrante avec des extrémités qui sont ouvertes des deux côtés, la douille de raccordement (21) avec la section transversale polygonale, en particulier hexagonale, de la rainure de réception et de la surface latérale étant disposée au niveau d'une extrémité de bougie et une douille ronde (22) ayant une paroi périphérique cylindrique circulaire étant disposée au niveau de l'autre extrémité de bougie.

11. Agencement de filtre doté d'un filtre de fluide qui comprend un boîtier et au moins un dispositif de retenue disposé dans le boîtier avec une ouverture traversante (6 ; 106 ; 206) comprenant une paroi intérieure pour fixer un élément filtrant, ainsi qu'au moins un élément filtrant (10 ; 210), **caractérisé en ce que** l'élément filtrant est conforme à l'une quelconque des revendications 1 à 10 et l'élément filtrant est fixé dans l'ouverture traversante du dispositif de retenue par un joint torique en tant que bague d'étanchéité.

**12.** Agencement de filtre selon la revendication 11, **caractérisé en ce que** la base de rainure (33A ; 133A ; 233A) et la paroi intérieure dans chaque cas présentent un nombre pair de parties plates de type similaire, la base de rainure (33A ; 133A ; 233A) et la paroi intérieure (15 ; 215) et la périphérie extérieure de la surface latérale dans chaque cas présentant une section transversale hexagonale avec six parties plates (16, 36, 26 ; 116, 126, 136 ; 216, 226, 236) et six transitions incurvées (17, 27, 37 ; 117, 127, 137 ; 217, 227, 237), de préférence, les parties plates (26 ; 36) opposées par paires et parallèles au niveau de l'espacement ($A_i$) et les transitions incurvées (27 ; 37) sur la base de rainure (33A), la paroi interne (15) et la surface latérale (22) dans chaque cas présentant chacune un rayon de courbure ($R_i$) uniforme les unes par rapport aux autres, le rapport entre l'espacement et le rayon de courbure étant le suivant :

$$2 < A_i/R_i \leq 5,$$

ou

$$2,3 \leq A_i/R_i \leq 3,6$$

**13.** Agencement de filtre selon la revendication 11 ou 12, **caractérisé en ce que** le filtre de fluide est un filtre à plusieurs éléments et le dispositif de retenue présente plusieurs ouvertures traversantes pour recevoir une pluralité d'éléments filtrants selon les revendications 1 à 10.

**14.** Agencement de filtre selon l'une quelconque des revendications 11 à 13, **caractérisé en ce que** la paroi intérieure du dispositif de retenue (203 ; 270) dans chaque cas est pourvue d'un chanfrein d'insertion (6A ; 219) destiné à coopérer avec la face avant de la douille de raccordement (21 ; 221) de l'élément filtrant à fixer.

**15.** Agencement de filtre selon l'une quelconque des revendications 11 à 14, **caractérisé en ce que** le dispositif de retenue comprend une plaque perforée (3) avec des ouvertures traversantes (6) ménagées d'un seul tenant dans la plaque perforée, dans chaque cas présentant la section transversale polygonale, ou **en ce que** le dispositif de retenue comprend des inserts (270) séparés qui comprennent les ouvertures traversantes ayant une section transversale polygonale et qui sont fixés sur une plaque perforée (203).

FIG 1

FIG 2

FIG 3

VII

FIG 5

**3**

**6**

**6**

**6**

**6**

$\underline{7}$    $\underline{7}$

VII

$\underline{8}$

$\underline{7}$

VII

**21**

**27**    **22**

$R_R$

**39**

$\underline{28}$

M

$R_R$

$\underline{28A}$

**26**    **33**

FIG 4

**15**

$R_W$

**16**    **17**

**17**

$\underline{6}$

**17**    **16**

$A_W$

**16**    **17**

**16**

**17**    **16**

FIG 6

FIG 8

FIG 9

FIG 7

FIG 10

FIG 11

FIG 12

FIG 13

FIG 14

FIG 15

FIG 16

FIG 17

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 202005010059 U
- DE 20320121 U
- EP 3124092 A1
- DE 202006001793 U